# FASCICULE DE BREVET EUROPEEN

(11) **EP 0 545 791 B1**
(45) Date de publication et mention de la délivrance du brevet: **01.05.1996**
(21) Numéro de dépôt: 92403201.4
(22) Date de dépôt: 27.11.1992
(51) Int. Cl.: A01K 41/00, A01K 45/00

(54) **Système pour séparer les poussins nouvellement éclos, des débris de l'éclosion**
System zur Trennung von frisch ausgeschlüpften Küken von den Schlüpfrückständen
System for separating freshly hatched chickens from the hatching debris

(30) Priorité: 02.12.1991 FR 9114894
(43) Date de publication de la demande: 09.06.1993
(73) Titulaire: BREUIL S.A., F-29402 Landivisiau Cédex (FR)
(72) Inventeur: Keromnes, Bernard, F-29600 Plourin Les Morlaix (FR); Breuil, Jean-Pierre, F-29670 Locquenole (FR)
(74) Mandataire: Chambon, Gérard

(56) Documents cités:
- DE-C- 3 900 012

## Description

L'invention concerne un système pour séparer les poussins nouvellement éclos, des débris de l'éclosion.

Pour faire éclore des poussins, on dispose les oeufs dans des paniers au dix huitième jour d'incubation. Ces paniers sont empilés et sont placés dans un éclosoir où les poussins éclosent au 21ème jour d'incubation.

Dans les paniers, on trouve ainsi des poussins, des oeufs clairs (non fécondés), des oeufs non éclos (embryons morts), des gros morceaux de coquilles vides représentant environ chacun les trois quarts d'une coquille complète, des morceaux moyens, dénommés ci-après "chapeaux", et représentant environ le quart d'une coquille complète et bien sûr, plein de petits morceaux de coquilles.

Pour récupérer les poussins, la technique ancienne consistait à trier ceux-ci manuellement parmi tous les déchets.

Pour tenter de séparer automatiquement les poussins des déchets, on a évidemment cherché à concevoir des systèmes.

C'est comme cela que l'on a imaginé de disposer le contenu des paniers d'éclosion sur un tapis séparateur mobile, constitué de rouleaux cylindriques, comme décrit dans le document DE-A-3 900 012.

Les poussins ainsi que les "chapeaux" et les petites coquilles passent à travers les barreaux du tapis, lequel retient par contre les grosses coquilles, les oeufs clairs et les oeufs non éclos.

Sous le tapis séparateur, est prévu un tapis récupérateur, également à barreaux, mais dont les entraxes sont plus faibles de manière à retenir les poussins et les "chapeaux", tandis que les petites coquilles passent au travers.

Le tapis récupérateur convoie ensuite les poussins et les "chapeaux" vers un système de ventilation constitué d'un souffleur inférieur et d'un aspirateur supérieur, de manière à aspirer lesdits "chapeaux" pour ne laisser que les poussins.

Toutefois, le problème majeur d'un tel système réside dans la présence des oeufs clairs qui sont d'autant plus nombreux que les poules pondeuses vieillissent. En outre, on constate un accroissement de la fragilisation de ces oeufs clairs dont les coquilles sont de plus en plus fines.

Or, il est clair que les jaunes d'oeuf qui se déposent sur les rouleaux, encrassent ces derniers et empêchent les poussins de passer.

C'est pourquoi on a cherché, par exemple, à renverser les paniers sur un tapis souple...

C'est pourquoi aussi on a mis au point, et notamment la société déposante, des ovoscopes pour mirer automatiquement les oeufs et écarter ainsi au mieux les oeufs clairs, mais cette technique est évidemment plus longue et coûteuse, à moins de bien valoriser les oeufs clairs (aliments pour porcs ou veaux).

Pour palier ces inconvénients, l'inventeur a cherché un système qui soit susceptible de minimiser au mieux la casse des oeufs clairs tout en étalant correctement les poussins, qui force le passage entre les rouleaux et qui permette de laver, désinfecter et sécher les rouleaux pour supprimer leur salissement et favoriser le glissement des poussins.

Jusqu'à présent, comme il a été dit précédemment, l'une des techniques consistait à renverser les paniers sur un tapis souple, puis à les véhiculer vers les rouleaux. On a églament imaginé de renverser les paniers dans une trémie au-dessus des rouleaux pour laisser le contenu de la trémie tomber ensuite sur lesdits rouleaux.

Toutefois, dans ces deux cas, il y a beaucoup de casse.

C'est pourquoi, à partir d'un système comportant au moins un tapis mobile constitué de rouleaux disposés parallèlement entre eux, mais perpendiculairement à leur direction de déplacement et au-dessus duquel sont amenés les poussins et les débris à trier, lesdits poussins étant destinés à passer entre lesdits rouleaux, l'inventeur a imaginé un système qui est remarquable en ce qu'il comporte au moins un bras support qui est monté au-dessus du tapis de manière rotatif autour d'un axe sensiblement parallèle aux rouleaux dudit tapis et qui comporte des moyens pour maintenir au moins un panier dans lequel sont disposés les poussins et les débris à trier.

En conséquence, l'inventeur a entre autre imaginé un moyen pour retourner les paniers directement au-dessus du tapis de rouleaux.

Avantageusement, le mouvement rotatif du bras est à contresens du déplacement du tapis de rouleaux, dans sa trajectoire semi-circulaire inférieure.

De préférence, le tapis de rouleaux présente, juste au dessous du bras rotatif, une surface de trajectoire en partie cylindrique concave dont l'axe de courbure est coaxial à l'axe de rotation dudit bras, ce dernier étant en outre disposé au-dessus du plan général du tapis, à une distance inférieure à la longueur du bras, de manière que ladite surface de trajectoire en partie cylindrique, soit sensiblement parallèle et voisine de la surface décrite par le bord extérieur du bras et/ou du panier.

Un mode de réalisation avantageux est remarquable en ce qu'il comporte au moins deux bras diamétralement opposés et destinés à recevoir au moins deux paniers, de manière que l'on puisse charger un panier plein d'un côté, tout en déchargeant un panier vide de l'autre, le déchargement du panier s'effectuant, par exemple, au moyen d'une pelle preneuse. Pendant ce temps, le tapis se déplace et dégage tout ce qui se trouve sous les bras, de telle sorte qu'un nouveau cycle peut commencer.

L'inventeur a aussi imaginé un moyen astucieux pour entraîner les rouleaux dans un sens, puis dans l'autre. Selon un mode de réalisation, les rouleaux du tapis sont montés libres en rotation tandis que ledit tapis de rouleaux défile au-dessus d'une batterie de galets entraînés en rotation et disposés sous au moins une partie dudit tapis, de manière telle que chaque rouleau au cours de son trajet, est entraîné temporairement en rotation par chaque galet.

De préférence, deux galets successifs sont entraînés en rotations inverses de telle sorte que les rouleaux changent leur sens de rotation à chaque contact avec un galet.

Ce changement de rotation continuel déséquilibre les poussins et les oblige à passer entre lesdits rouleaux surtout si ceux-ci tournent en sens opposés vers l'intérieur.

Selon un mode de réalisation, les entraxes des galets sont inférieurs à ceux des rouleaux, de telle sorte que pour une longueur donnée du tapis, il y a plus de galets que de rouleaux et en conséquence deux rouleaux successifs peuvent tourner par contact ou inertie en sens inverse vers le bas, ou en sens inverse vers le haut, ou encore dans le même sens.

Un autre mode de réalisation dans lequel le tapis de rouleaux décrit une surface fermée, est également remarquable en ce que sur une partie du trajet du tapis, est aménagé un dispositif de nettoyage et de séchage desdits rouleaux du tapis, qui comporte au moins une brosse rotative de lavage combinée avec une cuve de lavage remplie d'un liquide chauffé et dans laquelle elle vient au moins en partie tremper au cours de sa rotation, et au moins une brosse rotative de séchage ou d'essuyage combinée avec au moins un profil d'égouttage qu'elle vient heurter au cours de sa rotation, laquelle brosse de séchage ou d'essuyage est disposée en aval de la brosse de lavage par rapport au sens de défilement du tapis, lesdites brosses étant disposées pour venir frotter au cours de leur rotation les rouleaux du tapis. De préférence dans ce cas, les brosses de lavage et d'essuyage tournent en sens opposé au sens de défilement du tapis à l'endroit de leur contact avec les rouleaux.

L'invention sera bien comprise et d'autres particularités apparaîtront à la lecture de la description qui va suivre et qui se réfère aux dessins annexés dans lesquels:
- la figure 1 montre schématiquement un dispositif de renversement des paniers selon l'invention,
- la figure 2 montre en partie un tapis de rouleaux et ses moyens d'entraînement en rotation selon l'invention,
- la figure 3 schématise les moyens de nettoyage et de séchage du tapis de rouleaux selon l'invention.

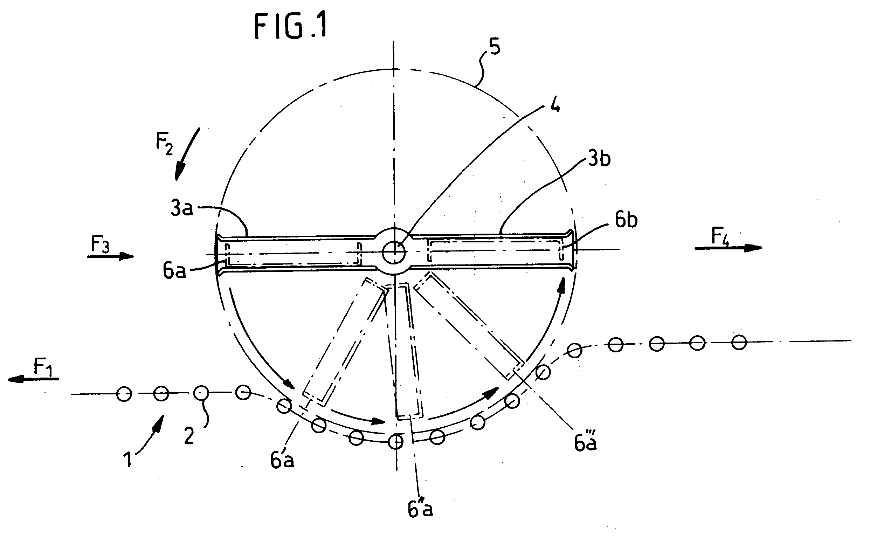

Sur la figure 1, on peut voir en partie un tapis 1 de rouleaux tels que 2, qui sont disposés parallèlement entre eux et qui se déplacent selon la flèche F1, c'est-à-dire perpendiculairement à leur propre disposition longitudinale.

Le dispositif de retournement selon l'invention comporte deux bras 3a et 3b diamétralement opposés, qui sont montés de manière à pouvoir tourner autour d'un axe 4 aménagé au-dessus du tapis 1 parallèlement aux rouleaux 2. La rotation des bras s'effectue selon la flèche F2, c'est-à-dire à contresens du défilement F1 du tapis si l'on considère sa trajectoire semi-circulaire inférieure.

Comme le montre bien la figure 1, le tapis 1 présente sous les bras 3a, 3b, un surface de trajectoire qui est en partie cylindrique concave de manière telle que la surface de déplacement des extrémités des bras 3a et 3b, schématisée en trait mixte en 5, soit voisine et parallèle de ladite surface de trajectoire du tapis en cet endroit.

Il suffit pour cela que l'axe de courbure de la trajectoire du tapis coïncide avec l'axe de rotation 4 des bras. En outre, l'axe 4 est disposé au-dessus du plan général du tapis à une distance inférieure à la longueur de chaque bras.

Les bras 3a et 3b comportent des moyens tels que des glissières destinées à recevoir des paniers.

Des moyens de retenue, non représentés plus en détail, sont évidemment prévus pour retenir les paniers.

On a représenté en 6a et 6b des paniers disposés dans les bras respectivement 3a et 3b.

Lorsque les bras 3a et 3b sont sensiblement à l'horizontal, comme représenté sur la figure 1, il est facile d'engager un panier 6a dans le bras 3a selon la flèche F3, de même qu'il est possible de retirer selon la flèche F4 le panier 6b du bras 3b, par exemple au moyen d'un organe tel qu'une pelle ou similaire, prévue à cet effet.

On comprend aussi que le panier 6a (le bras 3a étant vers l'avant par rapport au déplacement du tapis 1), est plein et qu'il s'engage de manière à présenter son ouverture vers le haut alors que le panier 6b se sera complètement retourné et présentera au contraire son ouverture vers le bas.

En effet, on a représenté schématiquement quelques positions intermédiaires 6'a, 6''a, 6'''a que va prendre le panier 6a avant d'acquérir la position de l'actuel panier 6b.

On comprend donc qu'au cours de sa trajectoire inférieure, le panier se retourne complètement et peut se vider de son contenu.

La courbure imposée au tapis permet de rapprocher le bord extérieur du panier au moment de son vidage.

En outre, on peut agir sur les moyens de rotation des bras, pour, par exemple, ralentir la vitesse de rotation au moment du vidage des paniers, par exemple entre les positions 6'a et 6'''a.

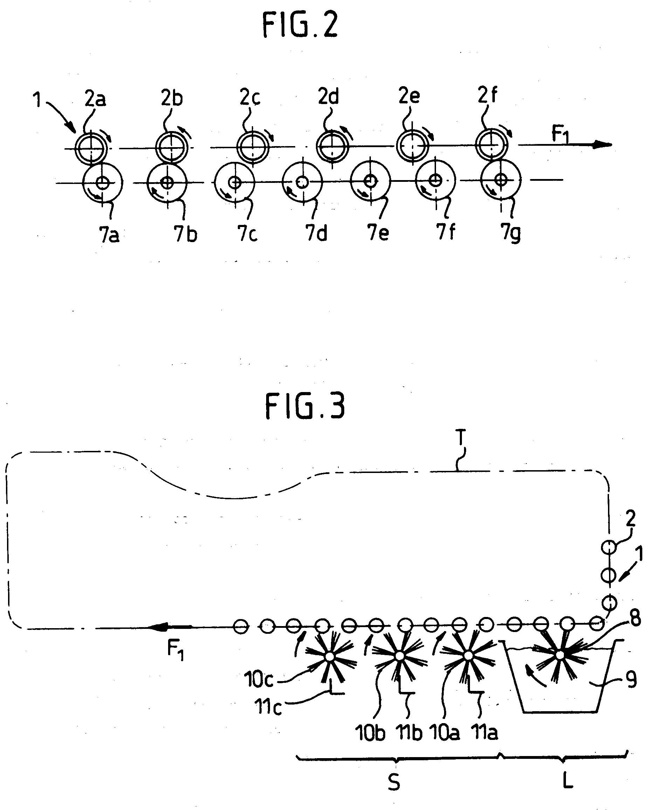

Les rouleaux 2 du tapis 1 sont montés libres en rotation et sont guidés, par exemple, par leurs extrémités dans des glissières pour parcourir une trajectoire fermée du type de la trajectoire T représentée à la figure 3.

Chaque rouleau 2 est en outre entraîné en rotation par une série de galets moteurs 7a-7g comme représentés sur la figure 2.

Sur la figure 2, on a représenté six rouleaux 2a-2f et sept galets 7a-7g.

Les galets sont montés rotatifs comme le montre la figure 2, de manière à tourner successivement de l'un à l'autre dans un sens, puis dans l'autre.

Ainsi et à titre d'exemple, les galets 7b, 7d, 7f tournent dans le sens horaire et les galets 7a, 7c, 7e et 7g tournent en sens opposés (voir les flèches sur le dessin).

En outre, comme on peut encore le voir sur la figure 2, les entraxes des galets sont inférieurs à ceux des rouleaux.

Dans l'exemple représenté, pour une longueur donnée du tapis, il y a un galet de plus que de rouleaux.

Les rouleaux rentrent successivement en contact avec chaque galet de telle sorte qu'ils sont entraînés alternativement dans un sens, puis dans l'autre, favorisant ainsi le passage des poussins entre lesdits rouleaux.

La flèche F1 représente toujours le sens de défilement du tapis.

De la sorte, les rouleaux 2a, 2b et 2f sont entraînés par contact avec les galets respectivement 7a, 7b et 7g, tandis que les rouleaux 2c, 2d et 2e sont entraînés par inertie après leur contact avec les galets respectivement 7c, 7d et 7e.

De la sorte, on constate que les rouleaux des paires de rouleaux 2a, 2b et 2c, 2d tournent en sens opposé vers le bas, favorisant le passage des poussins, les rouleaux des paires de rouleaux 2b, 2c et 2d, 2e tournent en sens opposé vers le haut, tandis que les rouleaux de la paire de rouleaux 2e, 2f tournent dans le même sens.

Toutefois, il est clair que ces sens de rotation sont considérés à un instant donné et que très peu de temps après, c'est un changement complet. Du fait du plus grand nombre de galets, on comprend que dans l'exemple représenté, un petit déplacement du tapis modifiera seulement d'abord le sens de rotation du rouleau 2e de telle sorte que ce sont les rouleaux de la paire 2d, 2e qui tourneront dans le même sens (inverse d'ailleurs au sens de rotation du rouleau 2f).

En vue de nettoyer les rouleaux, l'invention propose un système comportant notamment sur une partie du parcours desdits rouleaux: un brosse rotative 8 qui baigne dans une cuve 9 de lavage remplie, par exemple, d'eau chaude, suivie en aval par rapport au sens de défilement F1 du tapis, de trois brosses rotatives 10a, 10b et 10c disposées de manière à venir heurter au cours de leur rotation des profils en forme de cornières respectivement 11a, 11b et 11c.

Il est clair que les brosses 8, 10a, 10b et 10c sont disposées de manière à frotter les rouleaux 2 du tapis 1. En outre, il est clair aussi que la rotation des brosses comme représentée, s'effectue en sens opposé au défilement du tapis au niveau des zones de contacts avec les rouleaux.

On comprend que la brosse 8 et la cuve 9 forment un ensemble de lavage référencé L, tandis que les brosses 10a, 10b et 10c et les cornières 11a, 11b et 11c forment un ensemble d'essuyage ou de séchage référencé S.

La température du liquide de la cuve 9 favorise le séchage ultérieur des rouleaux par les brosses 10a, 10b et 10c qui viennent s'égoutter sur les cornières 11a, 11b et 11c.

De nombreuses variantes sont évidemment envisageables, sans sortir du cadre de l'invention.

C'est ainsi, par exemple, qu'il peut n'y avoir qu'un seul bras 3a ou au contraire plus de deux. On peut aussi prévoir plusieurs paniers 6a, 6b par bras, etc.

En outre, des moyens de commande du cycle et de robotisation pour le chargement et/ou le déchargement sont ou peuvent évidemment être prévus.

Il est clair aussi qu'il existe d'autres moyens tels notamment qu'un second tapis de récupération disposé sous le tapis 1, mais celui-ci, bien que nécessaire, ne fait pas partie à proprement parler de l'invention et n'est pas représenté.

## Revendications

1. Système pour séparer les poussins nouvellement éclos, des débris de l'éclosion, comportant au moins un tapis mobile (1) constitué de rouleaux (2) disposés parallèlement entre eux, mais perpendiculairement à leur direction de déplacement (F1) et au-dessus duquel sont amenés les poussins et les débris à trier, lesdits poussins étant destinés à passer entre lesdits rouleaux (2), caractérisé en ce qu'il comporte au moins un bras support (3a,3b) qui est monté au-dessus du tapis (1) de manière rotatif autour d'un axe (4) sensiblement parallèle aux rouleaux (2) dudit tapis (1) et qui comporte des moyens pour maintenir au moins un panier (6a,6b) dans lequel sont disposés les poussins et les débris à trier.

2. Système selon la revendication 1, caractérisé en ce que le mouvement rotatif (F2) du bras (3a,3b) est à contresens du déplacement (F1) du tapis (1) de rouleaux, dans sa trajectoire semi-circulaire inférieure.

3. Système selon l'une des revendications 1 et 2, caractérisé en ce que le tapis (1) de rouleaux (2) présente, juste au dessous du bras (3a,3b) rotatif, une surface de trajectoire en partie cylindrique concave dont l'axe de courbure est coaxial à l'axe (4) de rotation dudit bras, ce dernier étant en outre disposé au-dessus du plan général du tapis (1), à une distance inférieure à la longueur du bras, de manière que ladite surface de trajectoire en partie cylindrique, soit sensiblement parallèle et voisine de la surface décrite par le bord extérieur du bras et/ou du panier.

4. Système selon l'une des revendications 1 à 3, caractérisé en ce qu'il comporte au moins deux bras (3a,3b) diamétralement opposés et destinés à recevoir au moins deux paniers (6a,6b), de manière que l'on puisse charger un panier plein (6a) d'un côté, tout en déchargeant un panier (6b) vide de l'autre.

5. Système selon l'une des revendications 1 à 4, caractérisé en ce que la vitesse de rotation du ou des bras (3a,3b) est fonction de la position de ceux-ci, la vitesse étant plus réduite au moment du vidage des paniers sur le tapis de rouleaux.

6. Système selon l'une des revendications 1 à 5, caractérisé en ce que les rouleaux (2a-2f) du tapis (1) sont montés libres en rotation tandis que ledit tapis de rouleaux défile au-dessus d'une batterie de galets (7a-7g) entraînés en rotation et disposés sous au moins une partie dudit tapis, de manière telle que chaque rouleau (2a-2f) au cours de son trajet, est entraîné temporairement en rotation par chaque galet (7a-7g).

7. Système selon la revendication 6, caractérisé en ce que deux galets (7a-7g) successifs sont entraînés en rotations inverses de telle sorte que les rouleaux changent leur sens de rotation à chaque contact avec un galet.

8. Système selon l'une des revendications 6 et 7, caractérisé en ce que les entraxes des galets (7a-7g) sont inférieurs à ceux des rouleaux (2a-2f), de telle sorte que pour une longueur donnée du tapis, il y a plus de galets que de rouleaux et en conséquence deux rouleaux successifs peuvent tourner par contact ou inertie en sens inverse vers le bas (2a,2b; 2c,2d), ou en sens inverse vers le haut (2b,2c; 2d,2e), ou encore dans le même sens (2e,2f).

9. Système selon l'une quelconqe des revendiations 1 à 8 dont le tapis (1) de rouleaux (2) décrit une surface fermée (T), caractérisé en ce que sur une partie du trajet du tapis, est aménagé un dispositif de nettoyage et de séchage desdits rouleaux du tapis, qui comporte au moins une brosse rotative de lavage (8) combinée avec une cuve de lavage (9) remplie d'un liquide chauffé et dans laquelle elle vient au moins en partie tremper au cours de sa rotation, et au moins une brosse rotative de séchage ou d'essuyage (10a,10b,10c) combinée avec au moins un profil d'égouttage (11a,11b,11c) qu'elle vient heurter au cours de sa rotation, laquelle brosse de séchage ou d'essuyage est disposée en aval de la brosse de lavage (8) par rapport au sens de défilement du tapis, lesdites brosses étant disposées pour venir frotter au cours de leur rotation les rouleaux (2) du tapis (1).

10. Système selon la revendication 9, caractérisé en ce que les brosses (8,10a,10b et 10c) de lavage et d'essuyage tournent en sens opposé au sens de défilement du tapis (1) à l'endroit de leur contact avec les rouleaux (2).

## Claims

1. System for separating newly hatched chicks from the hatching debris comprising at least one moving conveyor (1) formed of rollers (2) disposed parallel with one another, but perpendicular to their direction of movement (F1) and over which the chicks and the debris to be sorted are carried, said chicks being supposed to pass between said rollers (2), characterised in that it comprises at least one supporting arm (3a, 3b) which is mounted above the conveyor (1) so as to be rotatable about an axis (4) substantially parallel with the rollers (2) of said conveyor (1) and which comprises means for holding at least one basket (6a, 6b) in which the chicks and the debris to be sorted are disposed.

2. System according to claim 1, characterised in that the rotary movement (F2) of the arm (3a, 3b) is in the opposite direction to the movement (F1) of the roller conveyor (1) in its lower semicircular path.

3. System according to one of claims 1 and 2, characterised in that just below the rotary arm (3a, 3b) the conveyor (1) formed of rollers (2) exhibits a path surface which is partially concave and cylindrical and the axis of curvature of which is coaxial with the axis (4) of rotation of said arm, the latter additionally being disposed over the general plane of the conveyor (1) a distance less than the length of the arm so that said partially cylindrical path surface is substantially parallel and adjacent to the surface described by the outer edge of the arm and/or the basket.

4. System according to one of claims 1 to 3, characterised in that it comprises at least two arms (3a, 3b) which are diametrically opposed and designed to receive at least two baskets (6a, 6b) so that a full basket (6a) can be loaded on one side while an empty basket (6b) is unloaded on the other.

5. System according to one of claims 1 to 4, characterised in that the speed of rotation of the arm or arms (3a, 3b) is a function of the position of these, the speed being less at the moment of emptying the baskets onto the roller conveyor.

6. System according to one of claims 1 to 5, characterised in that the rollers (2a-2f) of the conveyor (1) are fitted free to rotate while said roller conveyor moves over a set of driving rollers (7a-7g) driven in rotation and disposed under at least a part of said conveyor so that each roller (2a-2f) is temporarily driven in rotation by each driving roller (7a-7g) in the course of its movement.

7. System according to claim 6, characterised in that two successive driving roilers (7a-7g) are driven so as to rotate in different directions so that the conveyor rollers change their direction of rotation whenever they come into contact with a driving roller.

8. System according to one of claims 6 and 7, characterised in that the distances between the centres of the driving rollers (7a-7g) are less than those between the conveyor rollers (2a-2f) so that for a given length of conveyor there are more driving rollers than conveyor rollers and consequently two successive conveyor rollers can turn through contact or inertia downwards in opposite directions (2a, 2b; 2c, 2d), or upwards in opposite directions (2b, 2c; 2d, 2e), or again in the same direction (2e, 2f).

9. System according to any one of claims 1 to 8 in which the conveyor (1) formed of rollers (2) forms a closed surface (T), characterised in that over a part of the movement of the conveyor there is a cleaning and drying device for said conveyor rollers which comprises at least one rotary washing brush (8) combined with a washing tank (9) filled with a heated liquid and in which it is at least partially dipped in the course of its rotation, and at least one rotary drying or wiping brush (10a, 10b, 10c) combined with at least one draining profile (11a, 11b, 11c) which it strikes in the course of its rotation, which cleaning or wiping brush is disposed downstream of the washing brush (8) in relation to the direction of movement of the conveyor, said brushes being disposed so as to rub the rollers (2) of the conveyor (1) in the course of their rotation.

10. System according to claim 9, characterised in that the washing and wiping brushes (8, 10a, 10b and 10c) turn in the opposite direction to the direction of movement of the conveyor (1) in the location of their contact with the rollers (2).

## Patentansprüche

1. System zur Trennung von frisch ausgeschlüpften Küken von den Schlüpfrückständen mit wenigstens einem von zueinander parallelen, jedoch senkrecht zu ihrer Bewegungsrichtung (F1) angeordneten Walzen (2) gebildeten bewegbaren Band (1), oberhalb dessen die zu separierenden Küken und Rückstände zugeführt werden, wobei die Küken sich zwischen den Walzen (2) hindurchbewegen sollen, dadurch gekennzeichnet, daß es wenigstens einen Tragarm (3a, 3b) aufweist, der oberhalb des Bandes (1) um eine im wesentlichen parallel zu den Walzen (2) des Bandes (1) angeordnete Achse (4) rotierbar angebracht ist und Mittel zum Halten wenigstens eines Korbes (6a, 6b) aufweist, in dem sich die zu separierenden Küken und Rückstände befinden.

2. System nach Anspruch 1, dadurch gekennzeichnet, daß die rotierende Bewegung (F2) des Armes (3a, 3b) der Bewegung (F1) des Walzenbandes (1) in seiner unteren halbkreisförmigen Bahn entgegengerichtet ist.

3. System nach einem der Ansprüche 1 und 2, dadurch gekennzeichnet, daß das Walzenband (1, 2) genau unterhalb des rotierbaren Armes (3a, 3b) eine teilweise zylinderförmige konkave Bahnfläche aufweist, deren Krümmungsachse koaxial zur Rotationsachse (4) des Armes ist, und letzterer überdies oberhalb der Band-Hauptebene (1) in einem Abstand angeordnet ist, der kleiner als die Länge des Armes ist derart, daß die teilweise zylinderförmige Bahnfläche im wesentlichen parallel und benachbart zur Fläche ist, die durch den äußeren Rand des Armes und/oder des Korbes beschrieben wird.

4. System nach einem der Ansprüche 1 bis 3, dadurch gekennzeichnet, daß es wenigstens zwei einander diametral gegenüberliegende Arme (3a, 3b) aufweist, die wenigstens zwei Körbe (6a, 6b) aufnehmen können derart, daß man einen vollen Korb (6a) an einer Seite aufgeben kann, während ein leerer Korb (6b) an der anderen Seite entnehmbar ist.

5. System nach einem der Ansprüche 1 bis 4, dadurch gekennzeichnet, daß die Rotationsgeschwindigkeit des Armes oder der Arme (3a, 3b) abhängig ist von ihrer Position und die Geschwindigkeit im Augenblick des Entleerens des Korbes auf das Walzenband mehr reduziert ist.

6. System nach einem der Ansprüche 1 bis 5, dadurch gekennzeichnet, daß die Walzen (2a-2f) des Bandes frei rotierbar angebracht sind, während das Walzenband oberhalb einer rotativ angetriebenen Rollenbatterie (7a-7g) vorbeiläuft, die unter wenigstens einem Teil des Bandes derart angeordnet ist, daß jede Walze (2a-2f) im Verlauf ihrer Bahn durch jede Rolle (7a-7g) vorübergehend in Rotation versetzt wird.

7. System nach Anspruch 6, dadurch gekennzeichnet, daß zwei aufeinanderfolgende Rollen (7a-7g) entgegengesetzt rotativ angetrieben werden derart, daß die Walzen bei jedem Kontakt mit einer Rolle ihre Rotationsrichtung ändern.

8. System nach einem der Ansprüche 6 und 7, dadurch gekennzeichnet, daß die Achsabstände der Rollen (7a-7g) geringer sind als jene der Walzen (2a-2f) derart, daß über eine gegebene Bandlänge mehr Rollen als Walzen vorhanden sind und folglich zwei aufeinanderfolgende Walzen durch Kontakt oder Trägheit in entgegengesetzter Richtung nach unten (2a, 2b; 2c, 2d) oder in entgegengesetzter Richtung nach oben (2b, 2c; 2d, 2e) oder auch in derselben Richtung (2e, 2f) rotieren können.

9. System nach einem der Ansprüche 1 bis 8, bei dem das Walzenband (1, 2) eine geschlossene Fläche (T) beschreibt, dadurch gekennzeichnet, daß auf einem Bahnabschnitt des Bandes eine Reinigungs- und Trocknungseinrichtung für die Walzen des Bandes angeordnet ist, die wenigstens eine rotierende Waschbürste (8) mit einer Waschwanne (9), die mit einer erwärmten Flüssigkeit gefüllt ist, in die sie wenigstens teilweise während ihrer Rotation eintaucht, und wenigstens eine rotierende Trocknungs- oder Wischbürste (10a, 10b, 10c) kombiniert mit wenigstens einem Abtropfprofil (11, 11b, 11c), gegen welches sie während ihrer Rotation stößt, aufweist, und die Trocknungs- oder Wischbürste in Bewegungsrichtung des Bandes hinter der Waschbürste (8) angeordnet ist und die Bürsten so angeordnet sind, daß sie während ihrer Rotation die Walzen (2) des Bandes (1) abreiben.

10. System nach Anspruch 9, dadurch gekennzeichnet, daß die Wasch- und Wischbürsten (8, 10a, 10b und 10c) sich im Bereich ihrer Berührung mit den Walzen (2) in entgegengesetzter Richtung zur Bewegungsrichtung des Bandes (1) drehen.
